Europäisches Patentamt

European Patent Office

Office européen des brevets

(19)

(11) Veröffentlichungsnummer: **0 029 525**
**B1**

(12) **EUROPÄISCHE PATENTSCHRIFT**

(45) Veröffentlichungstag der Patentschrift:
09.11.83

(21) Anmeldenummer: 80106738.0

(22) Anmeldetag: 03.11.80

(51) Int. Cl.³: **H 02 M 1/12,** H 03 K 17/16,
H 02 H 7/125

(54) **Stromrichterventil.**

(30) Priorität: **12.11.79 SE 7909314**

(43) Veröffentlichungstag der Anmeldung:
**03.06.81 Patentblatt 81/22**

(45) Bekanntmachung des Hinweises auf die Patenterteilung:
**09.11.83 Patentblatt 83/45**

(84) Benannte Vertragsstaaten:
**CH DE FR GB LI**

(56) Entgegenhaltungen:
**AT - B - 269 994**
**CH - A - 533 928**
**DE - A - 1 488 972**
**DE - A - 1 613 781**
**DE - B - 2 448 408**

**DER ELEKTROMEISTER + DEUTSCHES**
**ELEKTROHANDWERK, Band 48, Nr. 15, 1973 H. KUNATH**
**"Funkentstörung nachträglich" Seiten 1022 bis 1025**

(73) Patentinhaber: **ASEA AB, S-721 83 Västeras (SE)**

(72) Erfinder: **Asplund, Gunnar, Dipl.-Ing., Bromsvägen 11,**
**S-771 00 Ludvika (SE)**

(74) Vertreter: **Boecker, Joachim, Dr.-Ing.,**
**Rathenauplatz 2-8, D-6000 Frankfurt a.M. 1 (DE)**

Stromrichterventil

Die Erfindung betrifft ein Stromrichterventil gemäß dem Oberbegriff des Anspruches 1.

Es ist bereits bekannt, ein Stromrichterventil mit einem Spannungsteiler zu versehen, um eine gleichmäßige Verteilung der Spannung auf die Thyristoren des Ventils zu erreichen. Ein solcher Spannungsteiler kann in bekannter Art so aufgebaut sein, daß zu jedem Thyristor eine Reihenschaltung aus einem Kondensator und einem Widerstand parallel geschaltet ist. Es ist ferner bekannt, in einem Ventil Induktivitäten zur Begrenzung der Anstiegsgeschwindigkeit des Stromes beim Zünden des Ventils anzuordnen.

Der Betrieb eines beispielsweise zu einem Stromrichter gehörenden Hochspannungsventils verursacht kräftige Radiostörungen aufgrund der bei der Kommutierung auftretenden transienten Spannungen und Ströme. Bei Stromrichtern für hohe Leistung sind diese Störungen so stark, daß nach dem Stande der Technik besondere Maßnahmen zur Reduzierung dieser Störungen erforderlich sind, wie z. B. das Anbringen von Drosseln in den Wechselstromzuleitungen (Phasendrosseln) und die elektromagnetische Abschirmung des Gebäudes oder Raumes, in dem die Ventile untergebracht sind (Ventilhalle).

Ein anderes Problem, das bei Stromrichterventilen dieser Art auftritt, sind die transienten Spannungen, denen die Thyristoren ausgesetzt sein können. Beispielsweise bei einem Erdschluß kann die Anstiegsgeschwindigkeit der Spannung an den Thyristoren sehr groß werden, und beispielsweise bei Blitzschlägen können die Thyrsitoren transienten Spannungen mit hoher Amplitude ausgesetzt sein. Ebenfalls können der Thyristor oder die Thyristoren des Ventils, die gegenüber den anderen Thyristoren verzögert, also zuletzt zünden, sehr steilen Spannungsanstiegen ausgesetzt sein.

Der Erfindung liegt die Aufgabe zugrunde, ein Stromrichterventil der eingangs genannten Art zu etnwickeln, bei dem auf einfache Weise einerseits die vom Ventil ausgesandten Radiostörungen kleingehalten werden und andererseits die Spannungsbeanspruchungen der Thyristoren reduziert sind.

Zur Lösung dieser Aufgabe wird ein Stromrichterventil nach dem Oberbegriff des Anspruches 1 vorgeschlagen, das erfindungsgemäß die im kennzeichnenden Teil des Anspruches 1 genannten Merkmale hat.

Vorteilhafte Weiterbildungen der Erfindung sind in den Unteransprüchen genannt.

Anhand der Figuren soll die Erfindung näher erläutert werden. Es zeigt

Fig. 1 einen Teil einer Ausführungsform eines Stromrichterventils gemäß der Erfindung,

Fig. 2 eine bevorzugte Ausführungsform der bei der Erfindung pro Ventil verwendeten beiden Induktivitäten,

Fig. 3 eine alternative Ausführungsform dieser Induktivitäten,

Fig. 4 schematisch die Filtrierung der Radiostörungen in zwei Stufen.

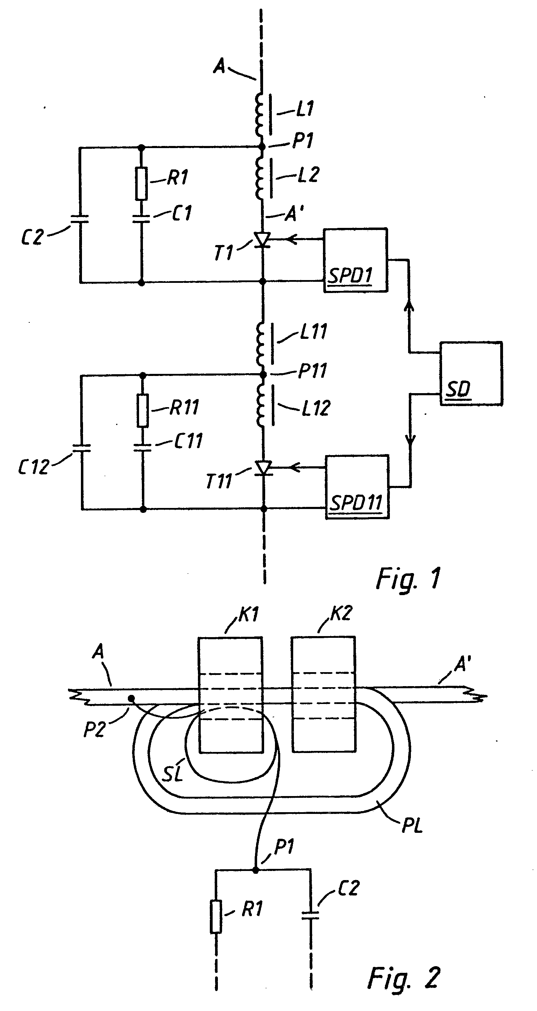

Fig. 1 zeigt zwei Thyristoren T1 und T11, die zu einem Hochspannungsventil gehören, das aus einer großen Anzahl von in Reihe geschalteten Thyristoren bestehen kann. Zu jedem Thyristor gehört eine Steuereinheit SPD1 und SPD11, die zwischen Steuereingang und Kathode des Thyristors angeschlossen ist. Ein für alle Thyristoren gemeinsames Steuerglied SD liefert zur Zündung der Thyristoren gleichzeitig ein Signal an alle Steuereinheiten, wobei jede Steuereinheit einen Steuerstromimpuls an ihren Thyristor gibt.

Der Thyristor T1 liegt anodenseitig mit zwei Induktivitäten L1 und L2 in Reihe. Zwischen dem Verbindungspunkt P1 der Induktivitäten und der Kathode des Thyristors T1 sind die Spannungsteilerimpedanzen R1, C1 und C2 angeschlossen.

Der Thyristor T11 sowie die übrigen Thyristoren des Ventils sind in gleicher Weise wie der Thyristor T1 mit zwei Induktivitäten L11 und L12 sowie mit den Spannungsteilerimpedanzen R11, C11 und C12 versehen.

Die Thyristoren des Ventils können außerdem in bekannter Weise mit weiteren Spannungsteilerimpedanzen, beispielsweise zur Speisung der Steuereinheiten, versehen sein. Zweckmäßigerweise kann zu jedem Thyristor ein relativ hochohmiger Widerstand parallel geschaltet werden, um bei reiner Gleichspannungsbeanspruchung eine gleichförmige Spannungsverteilung auf die Thyristorkette zu erreichen.

Die RC-Beschaltung R1 – C1 ist in bekannter Weise für die Spannungsverteilung bei normalem Betrieb verantwortlich. Der Kondensator C1 wird so dimensioniert, daß die Ungleichförmigkeit der Spannungsverteilung auf die Thyristoren des Ventils so klein wird, daß ein Kommutierungsfehler bei Wechselrichterbetrieb nicht eintreten kann. Der Widerstand R1 wird so dimensioniert, daß der Entladestrom des Kondensaotrs C1 beim Zünden des Thyristors auf einen für den Thyristor unschädlichen Wert begrenzt wird.

Die Induktivität L1 und der Kondensator C2 werden so dimensioniert, daß die Spannung am Thyristor T1 keine unzulässig hohe Anstiegsgeschwindigkeit erreicht, sei es bei schnellen Spannungssprüngen am ganzen Ventil oder dann, wenn der Thyristor gegenüber den übrigen Thyristoren des Ventils verzögert zündet. Der Kondensator C2, der vorzugsweise nicht mit einem Wirkwiderstand in Reihe geschaltet ist, kann zweckmäßigerweise eine niedrige Kapazität haben, was die Größe der Ladung verringert, die beim Zünden vom Kondensator über den Thyristor fließt. Dies entspricht auch der Aufgabe des Kondensators, hochfrequente Vorgänge zu dämpfen. Der Kondensator C2 kann beispielsweise eine Kapazität haben, die in der Größenordnung von 1−10% der Kapazität des Kondensators C1 liegt.

Die Induktivität L2 begrenzt den Entladestrom des Kondensators C2 beim Zünden des Thyristors.

Wenn das Ventil gezündet wird, erfolgt über das Ventil eine schnelle Umladung einer Anzahl ungedämpfter Kapazitäten in der Umgebung des Ventils (z. B. Streukapazitäten). Die Induktivitäten L1 und L2 werden so dimensioniert, daß diese sonst sehr hohen Ströme auf unschädliche Werte begrenzt werden.

Fig. 2 zeigt eine bevorzugte Ausführungsform der Induktivitäten L1 und L2. Der Anodenzuleiter A−A' des Thyristors (siehe auch Fig. 1) ist mit einer geeigneten Anzahl Windungen durch zwei Ringkerne K1 und K2 gezogen und bildet eine Primärwicklung PL. Diese Wicklung bildet zusammen mit dem Kern K1 die Induktivität L1 und zusammen mit dem Kern K2 die Induktivität L2. Die Induktivitätswerte der Induktivitäten werden durch die Wahl der Kernabmessungen und der Windungszahl auf die gewünschten Werte gebracht. Die Kerne K1 und K2 können beispielsweise gleich sein, so daß die Induktivitäten gleich große Induktivitätswerte haben. Die Windungszahl muß relativ klein sein, da der Zuleiter A−A' normalerweise sehr querschnittsstark ist. Werden mehr als eine Windung vorgesehen, so fehlt ein mittiger Verbindungspunkt zum Anschluß der Impedanzelemente R1, C1, C2 zwischen den Induktivitäten L1 und L2. Es wird dann ein künstlicher Verbindungspunkt P1 mit Hilfe einer um einen Kern, im Beispiel Kern K1 (Fig. 2), gewickelten Sekundärwicklung SL geschaffen, die aus einem relativ dünnen Leiter bestehen kann. Das eine Ende der Sekundärwicklung wird an einem außerhalb der Kerne K1 und K2 liegenden Punkt P2 am Leiter A−A' angeschlossen. Das andere Ende der Sekundärwicklung bildet den Verbindungspunkt P1. Wenn die Sekundärwicklung SL mit gleicher Windungszahl und gleicher Wickelrichtung wie die Primärwicklung PL ausgeführt wird, nimmt der Punkt P1 immer dasselbe Potential an, das der Verbindungspunkt der Induktivitäten annehmen würde, wenn völlig separate Induktivitäten verwendet würden, d. h. solche mit eigenem Kern und eigener Wicklung. Da der Leiter A−A' normalerweise sehr querschnittsstark ist, wird durch die in Fig. 2 gezeigte Ausführungsform eine erhebliche Raumersparnis erzielt im Vergleich zu der naheliegenden alternativen Ausführung mit zwei völlig separaten Induktivitäten.

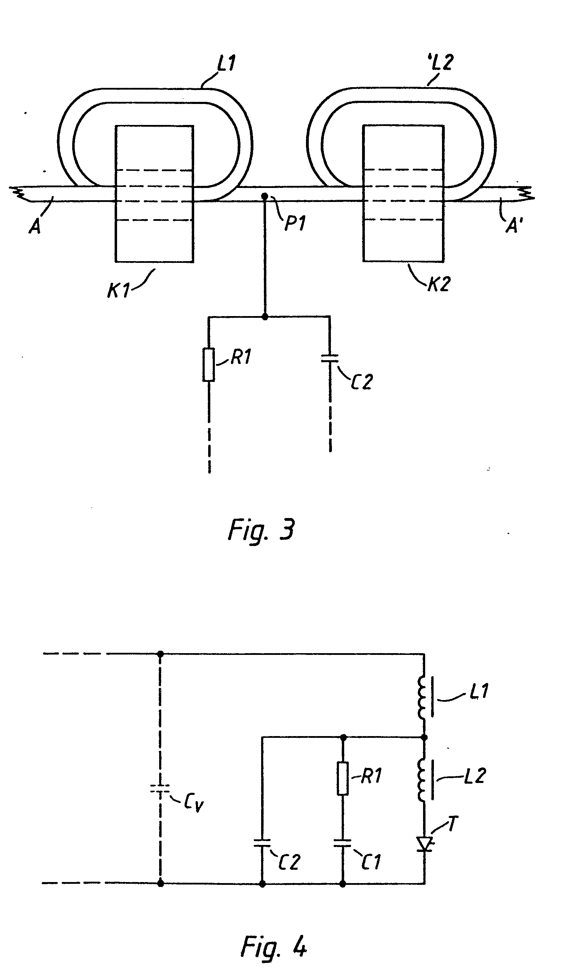

Ein Beispiel für die letztgenannte Ausführungsform zeigt Fig. 3. Hier wird der Zuleiter A−A' durch jeden Kern getrennt gewickelt. Diese Ausführungsform erfordert im allgemeinen bedeutend mehr Platz als die in Fig. 2 gezeigte Ausführungsform. In den Fällen, in denen die Induktivitäten nur je eine Windung haben, der Zuleiter A−A' also gerade durch die Kerne hindurchläuft, hat die Ausführungsform gemäß Fig. 2 jedoch keine Vorteile, da unmittelbar ein Verbindungspunkt zwischen den beiden Induktivitäten zugänglich ist (ein Punkt am Leiter A−A' zwischen den Kernen entsprechend P1 in Fig. 3).

Fig. 4 zeigt ein Ventil nach der Erfindung, das schematisch als ein einziger Thyristor mit Reiheninduktivitäten und Spannungsteilerelementen gemäß Fig. 1 dargestellt ist. Hinsichtlich der Dämpfung von Radiostörungen ist das Schaltbild in Fig. 4 einem wirklichen Ventil nach der Erfindung äquivalent. Der Thyristor kann als ein Generator betrachtet werden, der eine radiofrequente Wechselspannung erzeugt. Diese wird in zwei Stufen gefiltert. Die erste Stufe besteht aus der Induktivität L2 sowie den Kondensatoren C1 und C2 und dem Widerstand R1. Die zweite Stufe besteht aus der Induktivität L1 sowie der äußeren Kapazität Cᵥ, die aus Durchführungskapazitäten, Streukapazitäten und anderen äußeren Kapazitäten besteht. Diese Zweistufenfilterung bewirkt eine bedeutend höhere Dämpfung der Radiostörungen, insbesondere bei höheren Frequenzen, als eine Einstufendämpfung (d. h. mit nur einer Induktivität), wenn in beiden Fällen dieselbe Eisenmenge in den Kernen angewendet wird. Dadurch, daß die Filtermaßnahmen direkt im Ventil vorgenommen werden, kann auf die früher erforderlichen äußeren Entstörungsmaßnahmen (wie z. B. Phasendrosseln und Abschirmung der Ventilhalle) verzichtet werden, was eine erhebliche Reduktion der Gesamtkosten bedeutet.

In den Figuren sind die zu einem Thyristor gehörenden Induktivitäten an die Anode des Thyristors angeschlossen, was eine einfachere Speisung der Steuereinheiten, z. B. SPD1, über den Spannungsteiler ermöglicht. Alternativ können die zu einem Thyristor gehörenden Induktivitäten jedoch auch an die Kathode des Thyristors angeschlossen werden.

Vorstehend wurde angenommen, daß die Spannungsteilerimpedanzen R1 und C1 zwischen der Kathode des Thyristors T1 und dem Verbindungspunkt P1 der Induktivitäten angeschlossen sind. Diese Ausführungsform wird bevorzugt, da R1 und C1 dann zur Dämpfung der Spannungsschwingungen zwischen C2 und L1 beitragen. Alternativ kann jedoch die Reihenschaltung R1−C1 so angeschlossen werden, daß sie parallel zum Thyristor und beiden Induktivitäten liegt oder nur parallel zum Thyristor liegt.

## Patentansprüche

1. Stromrichterventil für Hochspannung mit mehreren in Reihe geschalteten Thyristoren (T1, T11) mit einem Spannungsteiler, der für jeden Thyristor eine zu diesem parallelliegende Reihenschaltung aus einem Widerstand (R1, R11) und einem ersten Kondensator (C1, C11) enthält, und mit mindestens einer Induktivität (L2, L12) zur Begrenzung der Anstiegsgeschwindigkeit des Stroms beim Zünden des Ventils, dadurch gekennzeichnet, daß jeder Thyristor (T1, T11) mit zwei in Reihe liegenden Induktivitäten (L1, L2; L11, L12) in Reihe geschaltet ist und daß für jeden Thyristor ein zweiter Kondensator (C2, C12) vorhanden ist, der zwischen dem Verbindungspunkt (P1, P11) der Induktivitäten und derjenigen Hauptelektrode des Thyristors angeschlossen ist, die nicht an den diesem Thyristor zugeordneten Induktivitäten angeschlossen ist.

2. Stromrichterventil nach Anspruch 1, dadurch gekennzeichnet, daß der Widerstand (R1, R11) und der erste Kondensator (C1, C11) zwischen dem Verbindungspunkt (P1, P11) der Induktivitäten (L1, L2; L11, L12) und derjenigen Hauptelektrode des Thyristors (T1) angeschlossen sind, die nicht an den diesem Thyristor zugeordneten Induktivitäten angeschlossen ist.

3. Stromrichterventil nach Anspruch 1 oder 2, dadurch gekennzeichnet, daß die Induktivitäten an die Anode des Thyristors angeschlossen sind.

4. Stromrichterventil nach einem der vorhergehenden Ansprüche, dadurch gekennzeichnet, daß der zweite Kondensator (C2, C12) eine Kapazität hat, die bedeutend niedriger als die Kapazität des ersten Kondensators (C1, C11) ist.

5. Stromrichterventil nach einem der vorhergehenden Ansprüche, dadurch gekennzeichnet, daß die beiden Induktivitäten jedes Thyristors je einen separaten Kern (K1, K2) und eine gemeinsame, in Reihe mit dem Thyristor geschaltete Primärwicklung (PL) haben, die die beiden Kerne umfaßt, und daß eine zweite Wicklung (SL) vorhanden ist, die nur den einen Kern (K1) umfaßt, wobei deren eines Ende (P2) an die Primärwicklung auf der einen Seite der Kerne angeschlossen ist und deren anderes Ende den Verbindungspunkt (P1) der Induktivitäten bildet.

6. Stromrichterventil nach Anspruch 5, dadurch gekennzeichnet, daß die zweite Wicklung (SL) dieselbe Anzahl Windungen wie die Primärwicklung (PL) hat.

**Claims**

1. High voltage convertor valve with a plurality of series connected thyristors (T1, T11), with a voltage divider comprising for each thyristor a series-connection of a resistor (R1, R11) and a first capacitor (C1, C11) connected in parallel to its respective thyristor, and with at least one inductance (L2, L12) for limiting the velocity of growth of the current upon ignition of the valve, characterized in that each thyristor (T1, T11) is connected in series with two series connected inductances (L1, L2; L11, L12), and that there is a second capacitor (C2, C12) for each thyristor which capacitor is connected between the point of connection (P1, P11) of the inductances and that one of the main electrodes of the thyristor which is not connected to the inductances assigned to this thyristor.

2. Convertor valve according to claim 1, characterized in that the resistor (R1, R11) and the first capacitor (C1, C11) are connected between the point of connection (P1, P11) of the inductances (L1, L2; L11, L12) and that one of the main electrodes of the thyristor (T1) which is not connected to the inductances assigned to this thyristor.

3. Convertor valve according to claim 1 or 2, characterized in that the inductances are connected to the anode of the thyristor.

4. Convertor valve according to any of the preceding claims, characterized in that the second capacitor (C2, C12) has a capacitance which is considerably lower than the capacitance of the first capacitor (C1, C11).

5. Convertor valve according to any of the preceding claims, characterized in that the two inductances of each thyristor have a separate core (K1, K2) each and a common primary winding (PL) being connected in series to the thyristor and surrounding both of the cores, and that there is a second winding (SL), surrounding only one (K1) of the cores and having its one end (P2) connected to the primary winding on one side of the cores while its other end constitutes the point of conncetion (P1) of the inductances.

6. Convertor valve according to claim 1, characterized in that the second winding (SL) has the same number of turns as the primary winding (PL).

**Revendications**

1. Valve pour convertisseur de courant à haute tension comportant plusieurs thyristors (T1, T11) branchés en série, un diviseur de tension, qui contient pour chaque thyristor un montage série situé en parallèle avec ce thyristor et constitué par une résistance (R1, R11) et un premier condensateur (C1, C11), et au moins une inductance (L2, L12) servant à limiter la vitesse de montée du courant lors de l'amorçage de la valve, caractérisée par le fait que chaque thyristor (T1, T11) est monté en série avec deux inductances (L1, L2; L11, L12) branchées en série et qu'il est prévu pour chaque thyristor un second condensateur (C2, C12) qui est branché entre le point de jonction (P1, P11) des inductances et l'électrode principale du thyristor qui n'est pas reliée aux inductances associées à ce thyristor.

2. Valve pour convertisseur de courant suivant la revendication 1, caractérisée par le fait que la résistance (R1, R11) et le premier condensateur (C1, C11) sont branchés entre le point de jonction (P1, P11) des inductances (L1, L2; L11, L12) et l'électrode principale du thyristor (T1) qui n'est pas reliée aux inductances associées à ce thyristor.

3. Valve pour convertisseur de courant suivant la revendication 1 ou 2, caractérisée par le fait que les inductances sont raccordées à l'anode du thyristor.

4. Valve pour convertisseur de courant, suivant l'une des revendications précédentes, caractérisée par le fait que le second condensateur (C2, C12) possède une capacité qui est nettement inférieure à la capacité du premier condensateur (C1, C11).

5. Valve pour convertisseur de courant, suivant l'une quelconque des revendications précédentes, caractérisée par le fait que les deux inductances de chaque thyristor possèdent des noyaux respectifs séparés (K1, K2) et un enroulement primaire commun (P1) branché en série avec les thyristors et qui entoure les deux noyaux, et qu'il est prévu un second enroulement (SL) qui entoure uniquement un noyau (K1) et dont l'une des extrémités (P2) est raccordée à l'enroulement primaire d'un côté des noyaux et dont l'autre extrémité forme le point de jonction (P1) des inductances.

6. Valve pour convertisseur de courant suivant la revendication 5, caractérisée par le fait que le second enroulement (SL) possède le même nombre de spires que l'enroulement primaire (PL).

Fig. 1

Fig. 2

Fig. 3

Fig. 4